Europäisches Patentamt

European Patent Office

Office européen des brevets

(19)

(11) EP 0 627 676 B1

(12) EUROPÄISCHE PATENTSCHRIFT

(45) Veröffentlichungstag und Bekanntmachung des
Hinweises auf die Patenterteilung:
05.11.1997 Patentblatt 1997/45

(51) Int Cl.⁶: **G05B 9/02**, F16P 3/12

(21) Anmeldenummer: 94108240.6

(22) Anmeldetag: 27.05.1994

(54) **Verfahren zur elektronischen Überwachung und Steuerung des Öffnungs- und
Schliessvorganges von elektrisch betriebenen Aggregaten**

Method for supervising and controlling electronically the process of opening and closing electrically
driven aggregats

Méthode pour surveiller et contrôler électriquement le procédé d'ouverture et de fermeture des
aggrégats électriques

(84) Benannte Vertragsstaaten:
**DE ES FR GB IT SE**

(30) Priorität: **01.06.1993 DE 4318128**

(43) Veröffentlichungstag der Anmeldung:
**07.12.1994 Patentblatt 1994/49**

(73) Patentinhaber: **Leopold Kostal GmbH & Co. KG
58507 Lüdenscheid (DE)**

(72) Erfinder:
• **Janca, Reiner, Dr.
D-46286 Dorsten (DE)**
• **Spieker, Reinhold
D-58791 Werdohl (DE)**

(56) Entgegenhaltungen:
**DE-A- 3 034 118        DE-A- 4 000 730**

**Beschreibung**

Die vorliegende Erfindung geht von einem entsprechend dem Oberbegriff des Hauptanspruches konzipierten Verfahren aus.

Ein den Oberbegriff des Hauptanspruches entsprechendes Verfahren ist durch die DE 31 36 746 C2 bzw. EP-C-0 047 812 bekanntgeworden. Bei diesem Verfahren werden der Steuerelektronik über eine Sensoreinrichtung die ursächlich mit dem Aggregat zusammenhängenden Verstellparameter übermittelt. Laufend werden von der Sensoreinrichtung somit u.a. die Verstellrichtung, die Position und die Verstellgeschwindigkeit des Aggregates an die zugehörige Steuerelektronik weitergegeben. Um eindeutige Verstellparameter ermitteln zu können, besteht die Sensoreinrichtung eines jeden Aggregates aus zwei versetzt zueinander angeordneten Sensorelementen. Bei einer solchen Anordnung benötigt jedoch jedes Sensorelement z.B. kostenverursachende eigene Halteteile und Widerstände.

Der vorliegenden Erfindung liegt die Aufgabe zugrunde, bei einem Verfahren der eingangs erwähnten Art die zur Ermittlung der Verstellparameter des betreffenden Aggregates notwendigen Komponenten bei Beibehaltung eines möglichst einfachen Überwachungs- bzw. Steuerungsverfahrens erheblich zu reduzieren. Erfindungsgemäß wird diese Aufgabe durch die im kennzeichnenden Teil des Hauptanspruches angegebenen Merkmale gelöst.

Vorteilhaft bei einer solchen Ausgestaltung ist, daß trotz erheblich reduziertem Herstellungsaufwandes ein sicherer Schutz gegen Einklemmen gewährleistet ist.

Weitere vorteilhafte Ausgestaltungen des erfindungsgemäßen Verfahrens sind in den Unteransprüchen angegeben. Anhand eines in den Zeichnungen dargestellten Ausführungsbeispieles sei die Erfindung näher erläutert. Dabei zeigen

Fig. 1      ein Blockschaltbild eines Fensterhebers

Fig. 2      eine Kraftfahrzeugtür im Prinzip

Fig. 3      den Sensorsignalverlauf im Einklemmfall

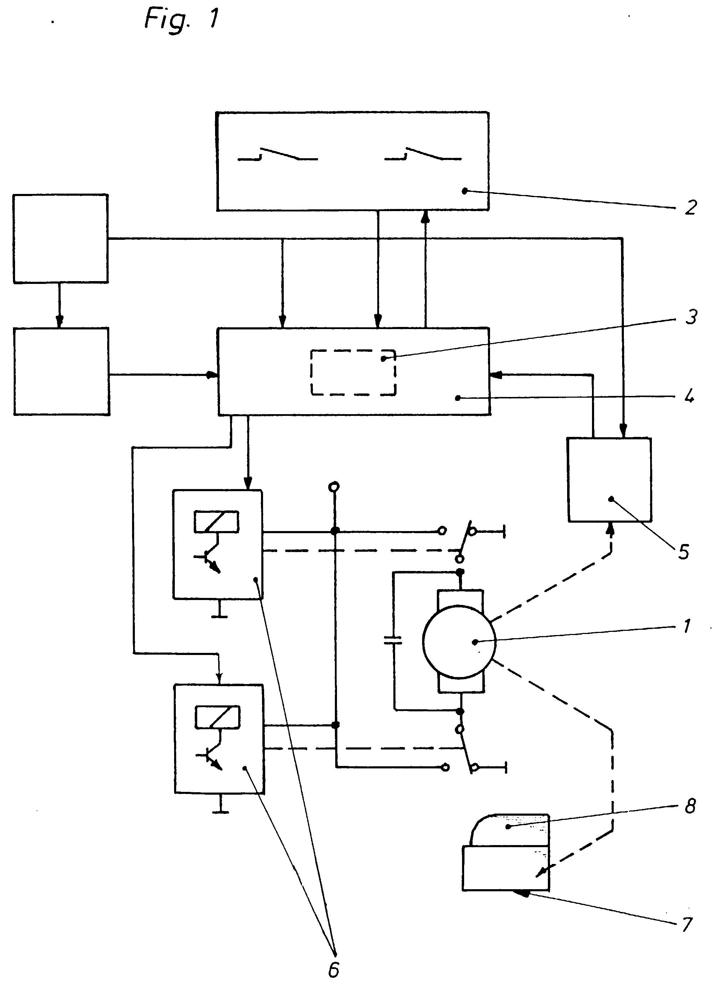

Wie aus dem in Fig. 1 dargestellten Blockschaltbild hervorgeht, ist das Aggregat als Fensterheber ausgebildet und setzt sich im wesentlichen aus einem an das elektrische Bordnetz eines Kraftfahrzeuges angeschlossenen elektrischen Motors 1, aus den zur unmittelbaren Beeinflussung des elektrischen Motors 1 vorgesehenen Bedienelementen 2, einer mit einem Mikrocomputer 3 versehenen Steuerelektronik 4, einem die Steuerelektronik 4 mit den Verstellparametern des Fensterhebers versorgenden Sensorelement 5 und zwei die Drehrichtungsumschaltung des elektrischen Motors 1 bewirkenden Leistungsschaltelementen 6, sowie den einer Kraftfahrzeugtür 7 zugeordneten, nicht dargestellten mechanischen Komponenten des Fensterhebers zusammen.

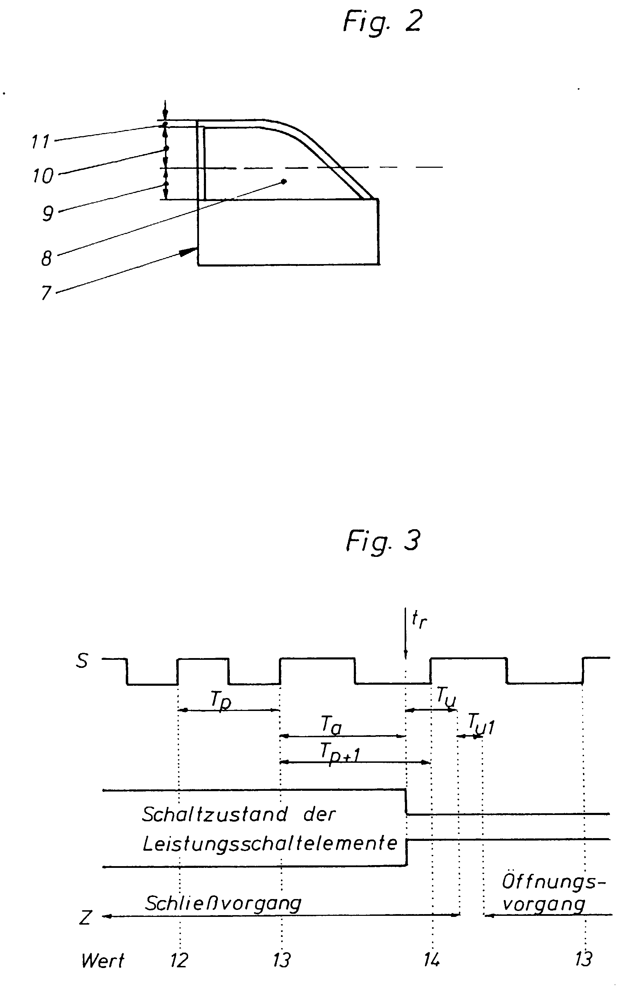

Wie insbesondere aus der Fig. 2 hervorgeht, durchläuft die Scheibe 8 des Fensterhebers während eines Schließvorganges ausgehend von der ersten Position "völlig geöffnet" drei Bereiche 9,10,11. Hierbei wird im ersten Bereich 9 und im dritten Bereich 11 der elektrische Motor 1 nur dann abgeschaltet, wenn er für eine bestimmte, relativ kurze Zeit im Blockierzustand gewesen ist. Der mittlere bzw. zweite Bereich 10 stellt den sogenannten Sicherheitsbereich dar, in dem ausgehend von einer sogenannten vorhergehend gemessenen, fortlaufend nachgebesserten Periodendauer $T_p$ durch fortlaufende Prüfung untersucht wird, ob nachfolgend gemessene Periodendauern $T_{p+1}$ eine als Grenzewert ermittelte Abschaltperiodendauer $T_a$ überschritten haben. Die Abschaltperiodendauer $T_a$ wird aufgrund der vom Sensorelement 5 ermittelten Verstellparameter des Fensterhebers vom Mikrocomputer 3 berechnet. In den Berechnungsvorgang gehen dabei Werte der vorgehend gemessenen Periodendauern $T_p$, der Verstellrichtung der Scheibe 8, der Position der Scheibe 8, der Verstellgeschwindigkeit der Scheibe 8 und dem bis zu diesem Zeitpunkt der Messung ermittelte Betriebspassungsverlauf des elektrischen Motors 1 ein. Sollte die nachfolgend gemessene Periodendauer $T_{p+1}$ die vom Mikrocomputer berechnete Abschaltperiodendauer $T_a$ überschreiten, tritt der sogenannte Einklemmschutz des Fensterhebers in Betrieb, d.h. der elektrische Motor 1 wird abgeschaltet und zum Reversierzeitpunkt $t_r$ gegensinnig betrieben, so daß die Scheibe 8 zumindest ein wenig geöffnet wird.

Formelmäßig gilt: Ist $T_{p+1} < T_a$, liegt kein Reversierfall vor, ist $T_{p+1} \geq T_a$ werden die beiden Leistungsschaltelemente 6 ohne Zeitverzögerung umgeschaltet, womit zum Reversierzeitpunkt $t_r$ ein gegensinniges Betreiben der Scheibe 8 eingeleitet wird.

Im zweiten, dem sogenannten Sicherheitsbereich soll der elektrische Motor 1 jedoch nur dann abgeschaltet und gegensinnig betrieben werden, wenn dafür ein triftiger Grund, z.B. das Einklemmen eines Körperteiles vorliegt.

Die von dem als Hallschaltelement ausgebildeten Sensorelement 5 ermittelten Meßwerte müssen jedoch wegen der unterschiedlichen äußeren Gegebenheiten des Fensterhebers immer der zum Zeitpunkt der Ermittlung vorliegenden Position der Scheibe 8 zugeordnet sein. Aus diesem Grund wird die Position der Scheibe 8 durch eine im Mikrocomputer 3 enthaltene Zähleinheit festgestellt. Die Zähleinheit wird beim Schließvorgang der Scheibe 8 ausgehend von der Position "völlig geöffnet" durch das Auftreten einer jeden positiven Flanke des vom Sensorelement 5 an die Steuerelektronik 4 abgegebenen Sensorsignales S ausgehend vom Wert MAX fortlaufend um den Wert 1 verringert. Bis zum Erreichen der Position "völlig geschlossen" wird somit der Wert der Zähleinheit fortlaufend reduziert. Beim Öffnungsvorgang der Scheibe 8 wird die Zählrichtung der Zähleinheit umgekehrt, so daß durch das Auftreten einer jeden positiven Flanke im Sensorsignal S der Wert der Zähleinheit entsprechend des Grades der Positionsveränderung fortlaufend erhöht wird. Die Erkennung der vorliegenden Drehrichtung des elektrischen Motors 1 ist also unerlässlich, damit die Zählrichtung der Zähleinheit umgekehrt und der Wert der Zähleinheit ordnungsgemäß um entsprechende Werte erhöht bzw. verringert werden kann. Dies ist besonders wichtig, weil die Drehrichtung des elektrischen Motors 1 bzw. die Verstellrichtung der Scheibe 8 bei jeder beliebigen Position der Scheibe 8 umgekehrt werden kann.

Problematisch ist die Zuordnung der Drehrichtung beim Einsatz nur eines Sensorelementes 5 und damit die Ermittlung der Position der Scheibe 8 dann, wenn sich eine unsichere Endstellung der Scheibe 8 nach dem Auslaufen des elektrischen Motors 1 ergibt. Unsichere Endstellungen entstehen z.B. dann, wenn ein schnelles Hin- und Herschalten der Bedienelemente 2 bei stehendem Motor vorgenommen wird. Dieses Problem kann relativ einfach durch eine ausreichende Hysterese des Sensorelementes 5 vermieden werden.

Problematisch kann weiterhin die Drehrichtungerkennung mit einem Sensorelement 5 dann sein, wenn der elektrische Motor 1 in die Blockierabschaltung (erster Bereich 9 und dritter Bereich 11) getrieben wird. Um in diesem Fall unsichere Drehrichtungen zu vermeiden, muß beim Blockieren des elektrischen Motors 1 im Mikrocomputer 3 die Zählrichtung der Zähleinheit umgeschaltet werden, bevor das der betreffenden Drehrichtung zugehörige, als Relais ausgebildete Leistungsschaltelement 6 abgeschaltet wird. Da durch das Blokkieren des elektrischen Motors 1 der Fensterheber verspannt wird, ist logischerweise ohne Antrieb nur eine Drehbewegung entgegen der Blockierrichtung möglich, womit dann auftretende Sensorsignale S eindeutig einer bestimmten Drehrichtung zugeordnet werden können.

Außerdem kann eine unbekannte Drehrichtung auch bei schnellem Richtungswechsel des elektrischen Motors 1 bzw. der Scheibe 8 auftreten. Bei schnellem Drehrichtungswechsel des elektrischen Motors 1, hervorgerufen durch eine schnelle Betätigung der Bedienelemente 2, stimmt die Drehrichtung des elektrischen Motors 1 nicht mehr mit der Ansteuerung der beiden jeweils einer Drehrichtung zugeordneten Leistungsschaltelementen 6 überein, so daß die Bestimmung der vorliegenden Drehrichtung mit einem Sensorelement 5 und damit auch eine eindeutige Positionsbestimmung der Scheibe 8 des Fensterhebers nicht mehr möglich ist. Hier kann das Wiederanlaufen der Scheibe 8 bzw. des elektrischen Motors 1 durch eine vorgegebene Sperrzeit verzögert werden. Die Sperrzeit muß dabei größer als die nach dem Abschalten des elektrischen Motors 1 auftretende Auslaufzeit des elektrischen Motors 1 sein. Mit dieser eine eindeutige Drehrichtungsbestimmung ermöglichenden Maßnahme geht gleichzeitig eine Funktionsverbesserung des Fensterhebers einher. Weil der Spieltrieb des Benutzers einen schnellen Richtungswechsel der Scheibe 8 durch eine schnelle mehrfache Betätigung der Bedienelemente 2 hervorzurufen gebremst und somit der gesamte Fensterheber geschont wird.

Darüber hinaus ist es äußerst problematisch, die Drehrichtung beim Auslösen des Einklemmschutzes eindeutig mittels eines Sensorelementes 5 zu bestimmen. Beim Aktivieren des Einklemmschutzes wird der Fensterheber bzw. der elektrische Motor 1 ohne nennenswerte Zeitverzögerung vom Schließvorgang auf den Öffnungsvorgang umgeschaltet (Drehrichtungsänderung). Das notwendige Umschalten der beiden jeweils einer Drehrichtung zugehörigen Leistungsschaltelemente 6 wird dabei in weniger als 3 ms durchgeführt. Zur eindeutigen Erkennung der Verstellrichtung der Scheibe 8 bzw. der Drehrichtung des elektrischen Motors 1 wird, wie im einzelnen schon beschrieben, auf Grundlage einer vorhergehend gemessenen Periodendauer $T_p$ vom Mikrocomputer 3 eine Abschaltperiodendauer $T_a$ berechnet, die synchron zur positiven Flanke des Sensorsignales S als Grenzwert mit der nachfolgend gemessenen Periodendauer $T_{p+1}$ in Vergleich gebracht wird.

Die Fig. 3 zeigt das vom Sensorelement 5 abgegebene Sensorsignal S insbesondere im Falle des wirksamwerdens des Einklemmschutzes. In diesem konkreten Fall wird die letzte vor dem Reversierzeitpunkt $t_r$ (Verstellrichtung der Scheibe 8 bzw. Drehrichtung des elektrischen Motors 1 wurden umgekehrt) gemessene Periodendauer $T_p$ des Sensorsignales S als Berechnungsgrundlage dem Mikrocomputer 3 zugeführt. Mittels eines Rechenprogrammes ermittelt der Mikrocomputer 3 aufgrund der letzten Periodendauer $T_p$ synchron zur positiven Flanke des Sensorsignales S, eine sogenannte Abschaltperiodendauer $T_a$. Die Abschaltperiodendauer $T_a$ wird dabei aufgrund der vom Sensorelement 5 ermittelten Verstellparameter des Fensterhebers vom Mikrocomputer 3 errechnet. In den Berechnungvorgang gehen dabei die Werte der vorhergehend gemessenen Periodendauer $T_p$, der der Verstellrichtung der Scheibe 8, der Position der Scheibe 8, der Verstellgeschwindigkeit der Scheibe 8 und dem bis zu diesem Zeitpunkt der Messung ermittelte Betriebsspannungsverlauf des elektrischen Motors 1 ein. Nach dem Ablauf der Abschaltperiodendauer $T_a$ muß auf jeden Fall ein Reversieren der Scheibe 8 eingetreten sein, wenn während dieses Zeitraumes keine positive Flanke des Sensorsignales S auftritt. Das bedeutet, daß die ermittelte Abschaltperiodendauer $T_a$ als Grenzwert zur Feststellung des Drehrichtungswechsels des elektrischen Motors 1 mit der nachfolgend gemessenen Periodendauer $T_{p+1}$ des Sensorsignales S in Vergleich gebracht wird. Deshalb müssen, wie insbesondere aus der Fig. 3 hervorgeht, nach dem Auslösen des Einklemmschutzes (Reversierzeitpunkt $t_r$) der Scheibe 8 die Zeiträume $T_u$ und $T_{u1}$ nachdem Reversierzeitpunkt $t_r$ berechnet werden, damit die Zähleinheit zur Feststellung der Position der Scheibe 8 ordnungsgemäß um entsprechende Werte erhöht bzw. verringert werden kann. Dabei entspricht $T_u$ dem Zeitraum in dem eine positive Flanke im Sensorsignal S noch in Schließrichtung der Scheibe 8 gezählt wird. $T_{u1}$ ist der Zeitraum, in dem keine positiven Flanken des Sensorsignales 5 auftreten.

Bei dem in der Fig. 3 dargestellten Reversierfall werden folgende Betrachtungsweisen vorgenommen:

1) Flanke vor dem Reversierzeitpunkt $t_r < t_r + T_u$ Die Motordrehrichtung hat sich noch nicht verändert; die Scheibe 8 befindet sich im Schließvorgang.

2) Flanke nach dem Reversierzeitpunkt

$$t_r + T_u \leq t < t_r + T_u + T_{u1}$$

Die Motordrehrichtung ist undefiniert; die Bewegungsrichtung der Scheibe 8 kann nicht ermittelt werden.

3) Flanke nach dem Reversierzeitpunkt $t \geq t_r + T_u + T_{u1}$ Die Motordrehrichtung hat sich umgekehrt; die Scheibe befindet sich im Öffnungsvorgang.

Aufgrund der Synchronisierung des im Mikrocomputer 3 abgelegten Rechenprogrammes mit dem Sensorsignal S des Sensorelementes 5 entsteht ein Zeitbereich (Fall 2), in dem keine Flanken des Sensorsignales S auftreten können. Aufgrund dieser Tatsache können die Drehrichtungen des elektrischen Motors 1 fehlerfrei bestimmt werden.

**Patentansprüche**

1.  Verfahren zur elektronischen Überwachung und Steuerung des Öffnungs- und Schließvorganges von in Kraftfahrzeugen vorgesehenen elektrisch betriebenen Aggregaten (7) mit Einklemmschutz, insbesondere von Fensterhebern und Schiebedächern, wobei ein an das elektrische Bordnetz angeschlossener in zwei Drehrichtungen betreibbarer elektrischer Motor (1) des betreffenden Aggregates unmittelbar über elektrische Bedienelemente (2) sowie mittelbar über eine ursächlich mit dem betreffenden Aggregat zusammenhängende Verstellparameter bezüglich Verstellrichtung, Position und Verstellgeschwindigkeit erfassende Sensoreinrichtung unter Zwischenschaltung einer einen Mikrocomputer (3) mit Zähleinheit beinhaltenden Steuerelektronik (4) beeinflussbar ist, **dadurch gekennzeichnet**, daß dem elektrischen Motor (1) des betreffenden Aggregates ein einziges die Verstellparameter erfassendes Sensorelement (5) zugeordnet ist, wobei zur eindeutigen Erkennung der Verstellrichtung und der Position des betreffenden Aggregates (7) die vorhergehend gemessene Periodendauer ($T_p$) des Sensorsignales (S) als Grundlage für die mittels eines im Mikrocomputer (3) der Steuerelektronik (4) abgelegten Rechenprogrammes ermittelten Abschaltperiodendauer ($T_a$) herangezogen wird und wobei die ermittelte Abschaltperiodendauer ($T_a$) als Grenzwert zur Feststellung des Reversierzeitpunktes ($t_r$) (Drehrichtungswechsel des elektrischen Motors (1)) synchron mit der nachfolgend gemessenen Periodendauer ($T_{p+1}$) des Sensorsignales (S) in Vergleich gebracht wird und bei welchem bei Feststellung des Reversierzeitpunktes ($t_r$) synchron zum Sensorsignal (S) aufgrund der zu diesem Zeitpunkt ermittelten Verstellparameter vom Mikrocomputer (3) ein Zeitraum ($T_u$) berechnet wird, in welchem die Zähleinheit vom Sensorelement (5) ermittelte positive Flanken des Sensorsignales (S) in Richtung der vor dem Reversierzeitpunkt ($t_r$) vorherrschende Verstellrichtung des betreffenden Aggregates zählt, sowie vom Mikrocomputer ein Zeitbereich ($T_{u1}$) berechnet wird, nach dessen Verstreichen vom Sensorelement (5) ermittelte positive Flanken des Sensorsignales (S) vom von der Zähleinheit in Gegenrichtung der vor dem Reversierzeitpunkt ($t_r$) vorherrschenden Verstellrichtung des betreffenden Aggregates gezählt werden.

2.  Verfahren nach Anspruch 1, dadurch gekennzeichnet, daß vom Rechenprogramm für die Berechnung der Abschaltperiodendauer ($T_a$), die zu diesem Zeitpunkt vorliegende Betriebsspannung herangezogen wird.

3.  Verfahren nach einem der Ansprüche 1 bis 2, dadurch gekennzeichnet, daß das Sensorelement (5) als Hallsensor ausgebildet ist.

4.  Verfahren nach einem der Ansprüche 1 bis 2, dadurch gekennzeichnet, daß das Sensorelement (5) als Lichtschranke ausgebildet ist.

5.  Verfahren nach einem der Ansprüche 1 bis 4, dadurch gekennzeichnet, daß der beim Öffnungs- und Schließvorgang des betreffenden Aggregates zu durchlaufende Weg in drei Bereiche (9,10,11) aufgeteilt ist, nämlich in einen ersten Bereich (9) von völlig geöffnet bis etwa halb geöffnet, in einen zweiten Bereich (10) von etwa halb geöffnet bis fast völlig geschlossen und in einem dritten Bereich (11) von fast völlig geschlossen bis völlig geschlossen, wobei nur dann für den Einklemmschutz relevante Verstellparameter für den Öffnungs- und Schließvorgang in Betracht gezogen werden, wenn sich das Aggregat im zweiten Bereich (10), dem sogenannten Sicherheitsbereich befindet.

6.  Verfahren nach einem der Ansprüche 1 bis 5, dadurch gekennzeichnet, daß mehrere Aggregate zu einem System zusammengefaßt sind, wobei die Sensorsignale der einzelnen den Aggregaten zugeordneten Sensorelementen (5) einer zentral angeordneten Steuerelektronik (4) zugeführt werden.

## Claims

1. Technique for electronically controlling and monitoring the opening and closing process of electrically driven aggregates (7) equipped with a protective device against trapping, especially window openers and sliding roofs in vehicles, whereby an electrical motor (1) of the aggregate concerned is connected to the electrical system and can be driven in two directions of rotation and is indirectly influenced by way of electrical control elements (2) and directly by way of a sensor device which registers the regulating parameters pertaining causally to the relevant aggregate and relating to the adjustment direction, the position and the adjusting speed, and with controlling electronics (4) which are connected in series and comprise a microcomputer with counting unit, **characterized by the fact that** a single sensor element (5) registering the regulating parameters pertains to the electrical motor (1) of the relevant aggregate whereby, in order to unequivocally identify the adjustment direction and the position of the relevant aggregate (7), the previously measured period ($T_p$) of the sensor signal (S) is used as the basis for the cut-off time ($T_a$) determined by way of a calculating programme filed in the microcomputer (3) of the controlling electronics (4) and whereby the ascertained cut-off period ($T_a$) is synchronously taken into comparison as a limiting value with the subsequently measured period ($T_{p+1}$) of the sensor signal (S) for the purpose of determining the reversing time ($t_r$) (change of direction of rotation of the electrical motor (1)), and by which upon determination of the reversing time ($t_r$) a period ($T_u$) is calculated by the microcomputer (3) synchronous to the sensor signal (S) on the basis of the regulating parameters determined at this point of time and during the said period ($T_u$) the counting unit counts the positive sides of impulse of the sensor signal (S) in the direction of the prevailing adjustment direction of the relevant aggregate determined by the sensor element (5) prior to the reversing time ($t_r$), and a time range ($T_{u1}$) is calculated by the microcomputer after which the positive sides of impulse of the sensor signal (S) determined by the sensor element (5) are counted by the counting unit in the direction opposing the adjustment direction of the relevant aggregate prevailing prior to the reversing time ($t_r$).

2. Technique in accordance with Claim 1, characterized by the fact that the operating voltage existing at the time is implemented by the calculating programme for calculating the duration of the cutoff period ($T_a$).

3. Technique in accordance with one of Claims 1 to 2, characterized by the fact that the sensor element (5) is designed as a Hall sensor.

4. Technique in accordance with one of Claims 1 to 2, characterized by the fact that the sensor element (5) is designed as a light barrier.

5. Technique in accordance with one of Claims 1 to 4, characterized by the fact that the path to be taken during the opening and closing process of the relevant aggregate is divided into three sectors (9, 10, 11), namely into a first sector (9) ranging from completely open to about half open, a second sector (10) ranging from about half open until almost completely closed and in a third sector (11) ranging from almost completely closed to completely closed, whereby the regulating parameters for the opening and closing process relevant to the protection device against trapping are only taken into consideration if the aggregate is in the second sector (10), the socalled safety sector.

6. Technique in accordance with one of Claims 1 to 5, characterized by the fact that several aggregates are coordinated into a system whereby the sensor signals of the individual sensor elements (5) pertaining to the aggregates are communicated to centrally positioned controlling electronics (4).

## Revendications

1. Procédé de contrôle et de commande électroniques de l'opération d'ouverture et de fermeture de mécanismes (7) actionnés électriquement, prévus dans des véhicules automobiles et comprenant un dispositif de protection contre les pincements et coincements, notamment de lève-glaces et de toîts ouvrants, un moteur électrique (1) du mécanisme en question, raccordé au réseau électrique de bord, est influencé directement à l'aide d'un élément de commande électrique (2) et indirectement, par l'intermédiaire d'une électronique de commande (4) comprenant un microordinateur (3) avec unité de comptage, à l'aide d'un dispositif de captage qui est en relation causale avec le mécanisme en question et saisit des paramètres d'ajustement concernant la direction de l'ajustement, la position et la vitesse d'ajustement,
caractérisé en ce
qu'un seul élément capteur (5), saisissant les paramètres d'ajustement, est coordonné au moteur électrique (1) du mécanisme concerné, la durée de période ($T_p$) du signal de capteur (S), mesurée antérieurement, étant prise en considération en tant que base pour la durée de période de mise hors circuit ($T_a$) déterminée à l'aide d'un programme de calcul mémorisé dans le microordinateur (3) de l'électronique de commande (4) et la durée de période de mise hors circuit ($T_a$) détectée étant, en tant que valeur limite de détermination du moment de renversement ($t_r$) (changement de sens de rotation du moteur électrique (1)), comparée, synchroniquement, à la durée de période ($T_{p+1}$) du signal de capteur (S), mesurée postérieurement, et, lors de la détermination du moment de renversement ($t_r$) synchroniquement par rapport au signal de capteur (S), en fonction des paramètres d'ajustement détectés à ce moment, le microordinateur (3) calcule un laps de temps ($T_u$), durant lequel l'unité de comptage compte les flancs positifs du signal de capteur (S) détectés par l'élément capteur (5) dans le sens de la direction d'ajustage du mécanisme qui régnait avant le moment de renversement ($t_r$), et une plage de temps ($T_{u1}$) étant calculé par le microordinateur, plage de temps après l'écoulement de laquelle les flancs positifs du signal (S), détectés par l'élément capteur (5) sont comptés par l'unité de comptage dans le sens opposé au sens d'ajustement du mécanisme concerné qui régnait avant le moment de renversement ($t_r$).

2. Procédé selon la revendication 1, caractérisé en ce que, pour calculer la durée de période de mise hors circuit ($T_a$), la tension de service présente à ce moment est prise en compte par le programme de calcul.

3. Procédé selon l'une des revendications 1 ou 2, caractérisé en ce que l'élément capteur (5) est conçu sous forme de capteur hall.

4. Procédé selon l'une des revendications 1 ou 2, caractérisé en ce que l'élément capteur (5) est conçu sous forme de barrage photoélectrique.

5. Procédé selon l'une des revendications 1 à 4, caractérisé en ce que le trajet à parcourir lors du processus d'ouverture et de fermeture du mécanisme concerné est divisé en trois zones (9, 10, 11), à savoir: une première zone (9) allant de complètement ouvert à demi-ouvert, une deuxième zone (10) allant de demi-ouvert à presque fermé et une troisième zone (11) allant de presque fermé à complètement fermé, des paramètres d'ajustement d'importance pour la protection contre pincements et coincements n'étant pris en considération pour l'opération d'ouverture et de fermeture que si le mécanisme se trouve dans la deuxième zone (10) dite zone de sécurité.

6. Procédé selon l'une des revendications 1 à 5, caractérisé en ce que plusieurs mécanismes peuvent être groupés en un système, les signaux des différents éléments capteurs (5) affectés aux différents mécanismes étant alors conduits à une électronique de commande (4) centrale.

## Fig. 1

## Fig. 2

## Fig. 3